# EUROPÄISCHE PATENTSCHRIFT

(11) **EP 4 444 607 B1**
(45) Veröffentlichungstag und Bekanntmachung des Hinweises auf die Patenterteilung: **03.12.2025**
(21) Anmeldenummer: 22830491.1
(22) Anmeldetag: 06.12.2022
(51) Int. Cl.: B62M 3/10

(54) **FAHRRADPEDAL MIT PINS MIT SCHRÄGER VERZAHNUNG**
BICYCLE PEDAL WITH PINS WITH ANGLED TOOTHING
PÉDALE DE VÉLO AVEC PINS À DENTURE OBLIQUE

(30) Priorität: 07.12.2021 DE 102021213914
(43) Veröffentlichungstag der Anmeldung: 16.10.2024
(73) Patentinhaber: Sport Import GmbH, 26188 Edewecht (DE)
(72) Erfinder: LAUER, Swen, 82467 Garmisch-Partenkirchen (DE)
(74) Vertreter: Fischer, Florian
(86) Internationale Anmeldenummer: PCT/EP2022/084489
(87) Internationale Veröffentlichungsnummer: WO 2023/104751

(56) Entgegenhaltungen:
- EP-A1- 2 778 440
- CN-U- 213 502 776
- DE-U1- 202011 003 213
- US-B2- 8 714 052

## Beschreibung

Die hierin beschriebene Erfindung betrifft ein Fahrradpedal mit mindestens einem Pin, der eine Schrägstellung gegenüber der Aufstandsfläche des Pedals aufweist. Ferner betrifft die vorliegende Erfindung einen derartigen Pin, der austauschbar an einem Fahrradpedal montierbar ist.

Fahrräder, die mit einer Tretkurbel angetrieben werden, weisen ein Fahrradpedal auf, welches an der Tretkurbel befestigt ist. Die Füße beziehungsweise Schuhe des Fahrers liegen während der Fahrt auf den Pedalen auf. Insbesondere bei Mountainbikes, die in der Regel durch teils unwegsames und ruppiges Gelände bewegt werden, ist es wichtig, dass der Fahrer mit seinen Schuhen einen vernünftigen Grip auf dem Pedal hat.

Dieser Grip kann beispielsweise dadurch hergestellt werden, dass der Fahrer sogenannte Click-Pedale nutzt. Hierbei klickt der Fahrer während der Fahrt mit einem in der Schuhsohle montierten sog. Cleat in einen vorgespannten Federmechanismus ein, der wiederum im Pedal montiert ist. Dies bietet einen kraftschlüssigen und somit sehr guten Kontakt zwischen dem Schuh und dem Pedal. Für viele Fahrer ist dies jedoch ungewohnt und unangenehm, da der Schuh in einer fest vorgegebenen Position im Pedal eingespannt ist, wodurch die Bewegungsfähigkeit schwindet. Außerdem muss der Fuß zum Ausklicken aus dem Pedal in einer unnatürlichen und nicht intuitiven Bewegung verdreht werden, was ebenfalls unbequem für den Fahrer sein kann. Darüber hinaus kommt es nicht allzu selten vor, dass ein Fahrer beim Stehenbleiben nicht rechtzeitig aus dem Klickpedal herauskommt und dann samt seinem Fahrrad zu Fall kommt.

Als Alternative zu den soeben beschriebenen Click-Pedalen gibt es sogenannte Plattformpedale. Der Pedalkörper eines solchen Plattformpedals weist auf der Ober- und Unterseite jeweils eine Standfläche bzw. Aufstandsfläche auf, auf der der Fahrer während der Fahrt mit seinen Schuhen stehen kann. Um den Grip zu verbessern, weisen diese Pedale auf beiden Aufstandsflächen jeweils eine Vielzahl sogenannter Pins auf. Dies sind dünne Metallstifte, die senkrecht in den Pedalkörper eingeschraubt werden können und im eingeschraubten Zustand über die jeweilige Aufstandsfläche hinausragen. Diese, senkrecht aus der jeweiligen Aufstandsfläche hinausragenden Pins, bohren sich dann in die Schuhsohle des Fahrers hinein. Dadurch bleibt der Schuh stabil auf dem Pedal. Dies gilt allerdings nur für Bewegungen in Fahrtrichtung, gegen die Fahrtrichtung sowie seitlich nach außen. Das heißt, die Pins bieten einen relativ guten Halt des Schuhs auf dem Pedal und können den Schuh gegen ein Verrutschen nach vorne, nach hinten sowie nach seitlich außen sichern. Dies gilt allerdings nur in gewissen Grenzen, denn insbesondere in ruppigem Gelände oder bei Sprüngen kann es durchaus vorkommen, dass der Schuh den Kontakt zu den Pins verliert, wodurch der Fahrer vom Pedal abrutschen kann. Dies kann zu Verletzungen, insbesondere im Bereich der Schienbeine, führen.

Das Dokument US 8 714 052 B2 zeigt ein gattungsgemäßes Fahrradpedal.

Daher wäre es wünschenswert, den Grip von Plattformpedalen mit Pins zu erhöhen, um dem Fahrer einen besseren und sichereren Stand auf den Aufstandsflächen der Pedale zu ermöglichen.

Dies wird erreicht mit einem erfindungsgemäßen Fahrradpedal mit den Merkmalen gemäß Anspruch 1 sowie mit austauschbaren Pins mit den Merkmalen gemäß Anspruch 28.

Das erfindungsgemäße Fahrradpedal weist einen Pedalkörper mit einer ersten Aufstandsfläche und einer gegenüberliegenden zweiten Aufstandsfläche auf. Sowohl auf der ersten Aufstandsfläche als auch auf der zweiten Aufstandsfläche sind jeweils eine Vielzahl von Pins angeordnet. Das erfindungsgemäße Pedal ist somit der Gattung der Plattformpedale zuzuordnen. Erfindungsgemäß weist mindestens einer dieser Pins einen Zahn auf, der eine Schrägstellung gegenüber der jeweiligen Aufstandsfläche des Fahrradpedals aufweist. Die Schrägstellung des Zahns weist einen Winkel zwischen 5° und 45° gegenüber einer Senkrechten zu der jeweiligen Aufstandsfläche auf, auf der der Pin montiert ist. Das heißt, der erfindungsgemäße Pin weist mindestens einen Zahn auf, der über die Aufstandsfläche des Pedals hinausragt. Der Zahn ragt jedoch nicht senkrecht zur jeweiligen Aufstandsfläche aus der selbigen hinaus, sondern der Zahn ragt schräg bzw. schief aus der Aufstandsfläche des Pedals hinaus und ist dabei um 5° bis 45° gegenüber einer Senkrechten zur Aufstandsfläche geneigt. Dies entspricht einem Winkel von 45° bis 85° gegenüber der Aufstandsfläche des Pedals. Dieser schräge Zahn kann deutlich besser in die Schuhsohle eingreifen als ein senkrecht aus der Aufstandsfläche hinausragender herkömmlicher Pin. Der erfindungsgemäße schräge Zahn kann den Schuh somit auch deutlich besser in die entsprechende Gegenrichtung fixieren als ein herkömmlicher senkrecht stehender Pin. Wenn also beispielsweise der Zahn in Fahrtrichtung nach vorne gerichtet ist, und somit schräg nach vorne in die Schuhsohle eindringt, dann ist der Schuh besonders effektiv gegen ein Verrutschen nach hinten gesichert. Wenn der Zahn hingegen in Fahrtrichtung nach hinten gerichtet ist, und somit schräg nach hinten in die Schuhsohle eindringt, dann ist der Schuh besonders effektiv gegen ein Verrutschen nach vorne gesichert. Gleiches gilt für eine Sicherung des Verrutschens nach außen. Das heißt, wenn der Zahn beispielsweise nach innen, d.h. in Richtung des Fahrradrahmens, gerichtet ist, so dringt er seitlich nach innen in die Schuhsohle ein, wodurch der Schuh besonders effektiv gegen ein Verrutschen nach außen gesichert werden kann. Herkömmliche Pins werden hingegen senkrecht in den Pedalkörper geschraubt, sodass sie senkrecht nach oben aus der jeweiligen Aufstandsfläche herausragen. Sie dringen somit senkrecht, d.h. in gerader Richtung von unten nach oben, in die Schuhsohle ein und können den Schuh somit nur in einem begrenzten Bereich gegen ein Verrutschen in eine bestimmte Richtung sichern.

Ein weiterer Aspekt der Erfindung betrifft einen austauschbaren Pin für ein Fahrradpedal. Der Pin weist eine Montageplatte auf, mittels derer der Pin an einer Aufstandsfläche des Fahrradpedals montiert werden kann. Erfindungsgemäß weist der Pin mindestens einen schrägen Zahn auf. Das heißt, der Zahn ist derart an der Montageplatte angeordnet, dass der Zahn eine Schrägstellung gegenüber der Aufstandsfläche des Fahrradpedals aufweist, wenn der Pin an dem Fahrradpedal montiert ist. Die Schrägstellung des Zahns weist einen Winkel zwischen 5° und 45° gegenüber einer Senkrechten zur Aufstandsfläche des Fahrradpedals auf. Das heißt, der Pin ist nicht senkrecht sondern schräg gegenüber der Aufstandsfläche des Pedals angeordnet, und ist dabei um 5° bis 45° gegenüber einer Senkrechten zur Aufstandsfläche geneigt. Dies entspricht einem Winkel von 45° bis 85° gegenüber der Aufstandsfläche des Pedals.

Der erfindungsgemäße Pin kann auf beiden Aufstandsflächen des Pedals angeordnet werden. Außerdem ist der Pin austauschbar, sodass er beispielsweise bei einem Bruch oder Verlust des schrägen Zahns einfach und schnell ausgetauscht werden kann.

Weitere Ausführungsformen und vorteilhafte Aspekte des erfindungsgemäßen Pedals bzw. der erfindungsgemäßen Pins sind in den jeweils abhängigen Patentansprüchen genannt.

Einige Ausführungsbeispiele sind exemplarisch in der Zeichnung dargestellt und werden nachstehend erläutert. Es zeigen:
- Fig. 1: eine seitliche Ansicht eines Fahrradpedals mit erfindungsgemäßen Pins gemäß einem Ausführungsbeispiel,
- Fig. 2: eine Detailansicht einer Aufstandsfläche des Fahrradpedals aus Figur 1,
- Fig. 3: eine Frontansicht eines Fahrradpedals mit mehreren Pins mit schrägen Zähnen gemäß einem Ausführungsbeispiel,
- Fig. 4A: eine Perspektivansicht eines erfindungsgemäßen Pins mit zwei schrägen Zähnen und einer ovalen Montageplatte gemäß einem Ausführungsbeispiel,
- Fig. 4B: eine Draufsicht auf den erfindungsgemäßen Pin aus Figur 4A,
- Fig. 5A: eine Perspektivansicht eines erfindungsgemäßen Pins mit einem schrägen Zahn und einer kreisrunden Montageplatte gemäß einem Ausführungsbeispiel,
- Fig. 5B: eine Draufsicht auf den erfindungsgemäßen Pin aus Figur 5A,
- Fig. 6A: eine Perspektivansicht eines erfindungsgemäßen Pins mit zwei schrägen Zähnen und einer kreisrunden Montageplatte gemäß einem Ausführungsbeispiel,
- Fig. 6B: eine Draufsicht auf den erfindungsgemäßen Pin aus Figur 6A,
- Fig. 7A: eine Perspektivansicht eines erfindungsgemäßen Pins mit drei schrägen Zähnen und einer kreisrunden Montageplatte gemäß einem Ausführungsbeispiel,
- Fig. 7B: eine Draufsicht auf den erfindungsgemäßen Pin aus Figur 7A,
- Fig. 8A: eine Perspektivansicht eines erfindungsgemäßen Pins mit vier schrägen Zähnen und einer kreisrunden Montageplatte gemäß einem Ausführungsbeispiel,
- Fig. 8B: eine Draufsicht auf den erfindungsgemäßen Pin aus Figur 8A, und
- Fig. 9: eine Perspektivansicht eines Fahrradpedals mit erfindungsgemäßen Pins gemäß einem Ausführungsbeispiel.

Im Folgenden werden Ausführungsbeispiele mit Bezug auf die Figuren näher beschrieben, wobei Elemente mit derselben oder ähnlichen Funktion mit denselben Bezugszeichen versehen sind.

Verfahrensschritte, die im Rahmen der vorliegenden Offenbarung abgebildet bzw. beschrieben sind, können auch in einer anderen als der abgebildeten beziehungsweise beschriebenen Reihenfolge ausgeführt werden. Außerdem sind Verfahrensschritte, die ein bestimmtes Merkmal einer Vorrichtung betreffen mit ebendiesem Merkmal der Vorrichtung austauschbar, was ebenso anders herum gilt.

Sofern innerhalb dieser Offenbarung von einem Fahrrad die Rede ist, so ist hierunter insbesondere ein Zweirad zu verstehen, das mit einer Tretkurbel angetrieben wird, an der wiederum ein entsprechendes Pedal befestigt werden kann. Unter den Begriff des Fahrrads fallen aber auch Einräder, Dreiräder, sowie Fahrzeuge mit vier oder mehr Rädern, die jeweils mit einer Tretkurbel und einem Pedal angetrieben werden können.

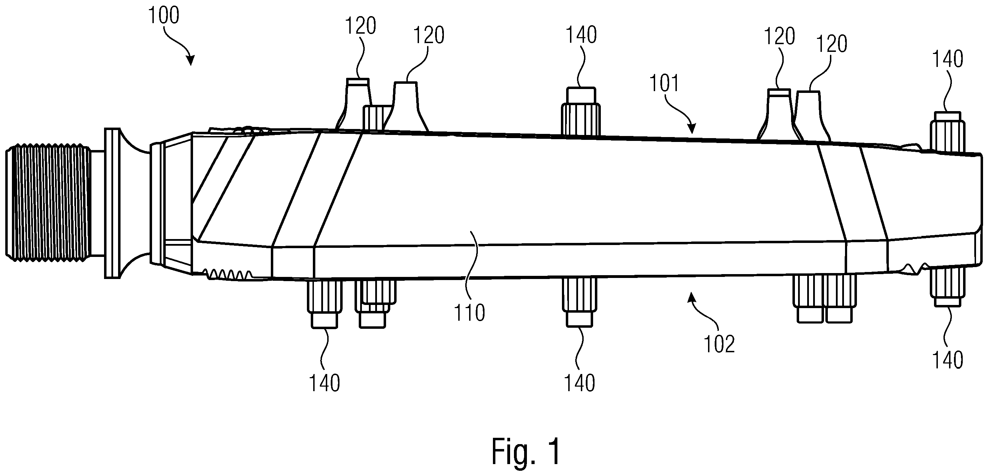

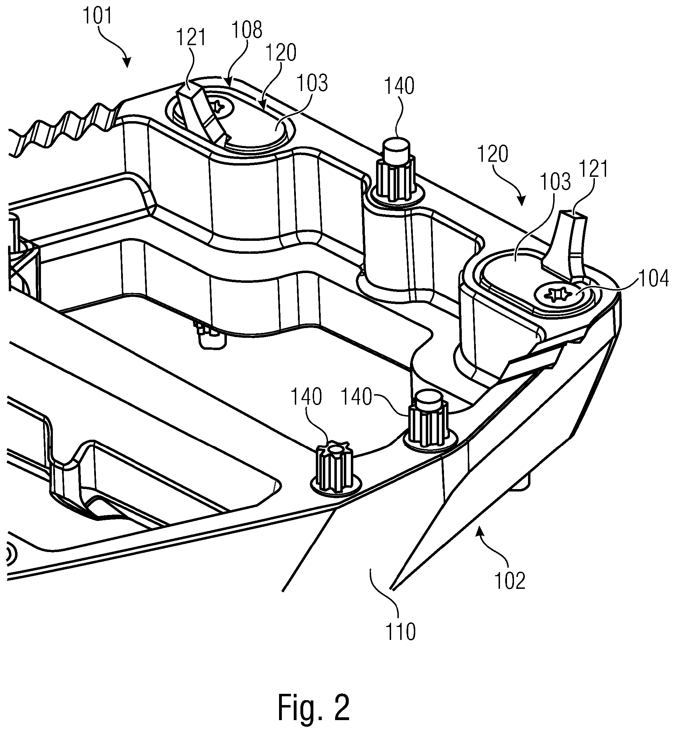

Das hierin beschriebene innovative Konzept der schrägen Pins soll zunächst unter Bezugnahme auf die Figuren 1 und 2 erläutert werden. Figur 1 zeigt eine seitliche Ansicht eines Fahrradpedals 100, und Figur 2 zeigt einen vergrößerten Ausschnitt einer Aufstandsfläche 101 des Fahrradpedals 100 in einer perspektivischen Ansicht.

Das Fahrradpedal 100 ist der Gattung der Plattformpedale, die auch als Flat Pedals bezeichnet werden, zuzuordnen. Das Fahrradpedal 100 weist einen Pedalkörper 110 auf. Der Pedalkörper 110 weist eine erste Aufstandsfläche 101 und eine gegenüberliegende zweite Aufstandsfläche 102 auf.

Sowohl auf der ersten Aufstandsfläche 101 als auch auf der zweiten Aufstandsfläche 102 ist jeweils eine Vielzahl an Pins angeordnet. Dabei kann es sich um herkömmliche Pins 140 handeln, die senkrecht in die jeweilige Aufstandsfläche 101, 102 eingeschraubt sind und senkrecht aus der Aufstandsfläche 101, 102 hinausragen.

In dem Fahrradpedal 100 ist jedoch mindestens einer der Pins als ein erfindungsgemäßer Pin 120 ausgestaltet. Der erfindungsgemäße Pin 120 kann also alternativ oder zusätzlich zu einem oder mehreren herkömmlichen Pins 140 an einem Fahrradpedal 100 angebracht werden.

In der perspektivischen Ansicht in Figur 2 ist die Geometrie der erfindungsgemäßen Pins 120 gut zu erkennen. Während die herkömmlichen Pins 140 senkrecht aus der jeweiligen Aufstandsfläche 101, 102 herausragen, weist der erfindungsgemäße Pin 120 einen Zahn 121 auf, der schräg zur jeweiligen Aufstandsfläche 101, 102 gerichtet ist. Wenn das in Figur 2 abgebildete Pedal 100 auf der rechten Seite eines Fahrrads montiert wäre, dann würde beispielsweise der rechts unten gezeigte Pin 120 einen Zahn 121 aufweisen, der in Fahrtrichtung nach vorne geneigt wäre, und der links oben gezeigte Pin 120 würde einen Zahn 121 aufweisen, der in Fahrtrichtung nach hinten geneigt wäre.

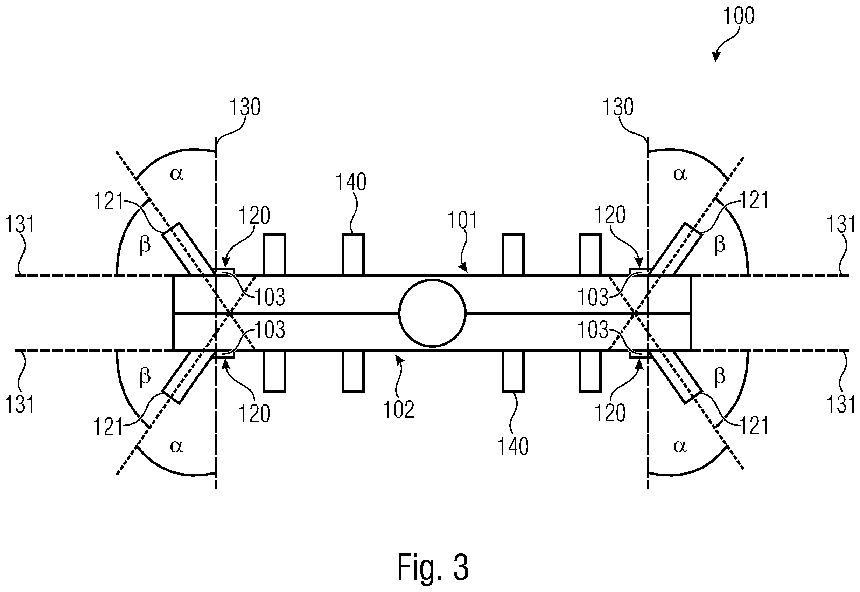

Diese Neigung bzw. Schrägstellung des Zahns 121 relativ zur Aufstandsfläche 101, 102 des Pedalkörpers 110 soll unter Bezugnahme auf Figur 3 näher erläutert werden. Figur 3 zeigt eine Frontansicht eines erfindungsgemäßen Pedals 100 mit einer ersten Aufstandsfläche 101 und einer gegenüberliegenden zweiten Aufstandsfläche 102, wobei jede Aufstandsfläche 101, 102 jeweils eine Vielzahl von Pins 120, 140 aufweist.

Rein beispielhaft sind hier zwei erfindungsgemäße Pins 120 auf der ersten Aufstandsfläche 101 sowie zwei erfindungsgemäße Pins 120 auf der zweiten Aufstandsfläche 102 gezeigt. Jeder Pin 120 weist einen Zahn 121 auf, der gegenüber der jeweiligen Aufstandsfläche 101, 102, auf der der jeweilige Pin 120 montiert ist, geneigt ist. Jeder Zahn 121 weist also eine Neigung bzw. Schrägstellung gegenüber der jeweiligen Aufstandsfläche 101, 102 auf.

Die Neigung bzw. Schrägstellung eines Zahns 121 weist einen Winkel α gegenüber einer Senkrechten 130 zu der jeweiligen Aufstandsfläche 101, 102 auf, auf der der jeweilige Pin 120 montiert ist. Der Betrag des Neigungswinkels α beträgt zwischen 5° und 45°, d.h. 5° ≤ α ≤ 45°. Das Vorzeichen des Neigungswinkels α, d.h. die Neigungsrichtung, sei hier zunächst vernachlässigt.

Alternativ könnte der Neigungswinkel durch den zum Winkel α komplementären Winkel β beschrieben werden. Der Neigungswinkel β bemisst sich gegenüber einer Parallelen 131 zur jeweiligen Aufstandsfläche 101, 102. Dementsprechend würde in diesem Falle der Neigungswinkel β einen Betrag zwischen 45° und 85° aufweisen, d.h. 45° ≤ β ≤ 85°. Auch hier sei das Vorzeichen des Neigungswinkels β, d.h. die Neigungsrichtung, zunächst vernachlässigt.

Wenn das in Figur 3 abgebildete Pedal 100 auf der rechten Seite eines Fahrrads montiert wäre, dann würden beispielsweise die beiden rechts gezeigten Pins 120 jeweils einen Zahn 121 aufweisen, der in Fahrtrichtung nach vorne geneigt wäre, während hingegen die beiden links gezeigten Pins 120 jeweils einen Zahn 121 aufweisen würden, der in Fahrtrichtung nach hinten geneigt wäre.

Die nach vorne geneigten Zähne 121 dringen schräg nach vorne in die Schuhsohlen eines Fahrers ein. Sie verkeilen sich dementsprechend in der Schuhsohle und wirken so einem ungewollten nach hinten Rutschen des Schuhs effektiv entgegen. Die nach hinten geneigten Zähne 121 dringen schräg nach hinten in die Schuhsohlen eines Fahrers ein und verkeilen sich dort, um so einem ungewollten nach vorne Rutschen des Schuhs effektiv entgegenzuwirken.

Ein weiterer wesentlicher Vorteil gegenüber den herkömmlichen senkrechten Pins 140 besteht außerdem darin, dass die erfindungsgemäße schräge Verzahnung 121 zudem dafür sorgt, dass der Schuh effektiv gegen ein ungewolltes nach oben gerichtetes Abheben vom Pedal gesichert ist. Die herkömmlichen senkrechten Pins 140 bieten lediglich laterale Gegenkräfte, d.h. der Schuh ist lediglich gegen ein laterales Verrutschen (nach vorne, nach hinten, zur Seite) gesichert. Nach oben kann der Schuh jedoch problemlos abgehoben werden.

Dadurch, dass sich die erfindungsgemäße schräge Verzahnung 121 jedoch, wie oben beschrieben, in den Schuhsohlen verkeilt, bieten die erfindungsgemäßen Pins 120 nicht nur laterale Gegenkräfte sondern auch vertikale Gegenkräfte, d.h. der Schuh ist sowohl gegen ein laterales Verrutschen (nach vorne, nach hinten, zur Seite), als auch gegen ein vertikales Abrutschen (nach oben) gesichert. Somit bieten die mit den erfindungsgemäßen Pins 120 ausgestatteten Pedale 100 einen deutlich besseren Grip im Vergleich zu herkömmlichen Plattformpedalen mit senkrechten Pins.

Rein der Vollständigkeit halber sei an dieser Stelle angemerkt, dass im Stand der Technik bereits Anstrengungen unternommen wurden, herkömmliche gerade bzw. senkrechte Pins 140 schräg in die Aufstandsflächen 101, 102 zu schrauben. Hierfür wurden schräge Gewindebohrungen in den Pedalkörper 110 eingebracht, und die herkömmlichen geraden Pins 140 wurden in diese schrägen Gewindebohrungen eingeschraubt. Es hat sich in der Praxis jedoch herausgestellt, dass das Einsetzen der Pins 140 in die schrägen Gewindebohrungen sehr problematisch ist. Die Pins 140 müssen natürlich exakt in dem gleichen Neigungswinkel eingeschraubt werden, der auch durch die schräge Gewindebohrung vorgegeben ist. Das heißt, wenn die Gewindebohrung mit einem Neigungswinkel von 10° in den Pedalkörper 110 eingeschnitten ist, dann müssen die Pins 140 ebenfalls in einem 10° Winkel eingeschraubt werden. Dieses schräge Ansetzen der Pins 140 ist jedoch für viele Nutzer sehr ungewohnt, weshalb es hier vermehrt dazu kam, dass die Nutzer die Pins 140 versehentlich in einem falschen Winkel angesetzt haben, wodurch es vermehrt zu Zerstörungen des Gewindes kam. Hinzu kommt, dass der Neigungswinkel nicht variabel ist. Sobald eine Gewindebohrung in einem bestimmten Neigungswinkel in den Pedalkörper 110 geschnitten wird, ist dieser Neigungswinkel nicht mehr veränderbar.

All diese Probleme umgeht die vorliegende Erfindung. Der hierin beschriebene erfindungsgemäße Pin 120 weist eine Montageplatte 103 (Figur 2) auf, mittels derer der Pin 120 an der ersten bzw. zweiten Aufstandsfläche 101, 102 des Pedalkörpers 110 montiert werden kann. Der Zahn 121 ist hierbei am Außenumfang der Montageplatte 103 angeordnet. Die Montageplatte 103 liegt flach auf der jeweiligen Aufstandsfläche 101, 102 des Fahrradpedals 100 auf, sodass die Montageplatte 103 parallel zu der jeweiligen Aufstandsfläche 101, 102 ausgerichtet ist. Dies ist im Übrigen auch in Figur 3 abgebildet.

Die Montageplatte 103 ist also parallel zur Aufstandsfläche 101, 102 und kann somit planparallel auf die jeweilige Aufstandsfläche 101, 102 aufgesetzt werden. Der Zahn 121 ist hierbei in der besagten Schrägstellung mit dem Neigungswinkel 5° ≤ α ≤ 45° auf der Montageplatte 103 angeordnet. Das heißt, der Neigungswinkel, mit dem der Zahn 121 auf der Montageplatte 103 angeordnet ist, entspricht dem besagten Neigungswinkel α gegenüber der Senkrechten 130 zur Aufstandsfläche 101, 102, was daher rührt, dass die Montageplatte 103 parallel zur jeweiligen Aufstandsfläche 101, 102 ist. Optional kann der Zahn 121 einstückig mit der Montageplatte 103 ausgestaltet sein.

Dies bietet den Vorteil, dass der Neigungswinkel α bereits bei der Produktion der Pins 120 eingestellt werden kann. Das heißt, ein Pin 120, der einen schrägen Zahn 121 mit einem bestimmten Neigungswinkel α aufweist, weist somit automatisch denselben Neigungswinkel auch im montierten Zustand am Fahrradpedal 100 auf. Es können also Pins 120 mit Verzahnungen 121 mit unterschiedlichen Neigungswinkeln α hergestellt werden. Da die Pins 120 austauschbar sind, kann ein Nutzer dementsprechend unterschiedliche Pins 120 mit unterschiedlichen Verzahnungen 121 und unterschiedlichen Neigungswinkeln α montieren. Es ist somit also nicht mehr nötig, eine schräge Gewindebohrung mit einem festgelegten Neigungswinkel in den Pedalkörper 110 einzubringen. Da die Montageplatte 103 zudem planparallel auf der jeweiligen Aufstandsfläche 101, 102 aufgelegt werden kann, kann der Nutzer, wie gewohnt, eine Schraube von oben ansetzen und gerade in den Pedalkörper 110 einschrauben.

Diesbezüglich sei nochmals auf Figur 2 verwiesen. Ein Montagemittel 104, hier zum Beispiel eine Schraube mit Torx-Kopf, wird von oben in eine dafür vorgesehene Montageöffnung in der Montageplatte 103 eingeführt. Unter der Montageöffnung weist der Pedalkörper 110 eine Gewindebohrung auf. Da diese Gewindebohrung bzw. das Gewinde senkrecht zur Aufstandsfläche 101 verläuft, kann die Schraube 104 auch senkrecht in den Pedalkörper 110 eingeschraubt werden. Der Nutzer kann sein Pin also wie gewohnt senkrecht in den Pedalkörper 110 einschrauben. Es ist kein schräges Ansetzen der Schraube 104 nötig, sodass Beschädigungen des Gewindes durch ein schräges Ansetzen der Schraube 104 im falschen Winkel vermieden werden können.

In dem hier abgebildeten Ausführungsbeispiel kann also die Schraube 104 von oben in die Montageöffnung der Montageplatte 103 eingesetzt werden. Unterhalb der Montageplatte 103 weist der Pedalkörper 110 ein Schraubgewinde auf, in das die Schraube 104 eingeschraubt werden kann. Das heißt, in diesem Ausführungsbeispiel kann die Schraube 104 von derselben Aufstandsfläche 101, 102 des Pedalkörpers 110 her in das Schraubgewinde eingeschraubt werden, auf der auch der Pin 120 selbst angeordnet ist.

Dies kann vorteilhaft sein, da die Schraube 104 beispielsweise länger sein kann als die Dicke des Pedalkörpers 110. Somit ragt im eingeschraubten Zustand das Ende der Schraube 104 aus der dem Pin 120 gegenüberliegenden Aufstandsfläche 101, 102 wieder heraus. Das Ende der Schraube 104 kann somit auf der gegenüberliegenden Aufstandsfläche 101, 102 wie ein herkömmlicher senkrechter Pin 140 wirken.

Daraus ergibt sich unmittelbar auch ein Vorteil hinsichtlich der Nachrüstbarkeit von herkömmlichen Pedalen mit dem erfindungsgemäßen Pin 120. Es gibt herkömmliche senkrechte Pins (in den Figuren nicht dargestellt) mit einem Schraubenkopf, wobei der Pin ein Gewinde aufweist, das sich lediglich ein paar Millimeter vom Schraubenkopf-seitigen Ende ausgehend am Pin entlang erstreckt, d.h. nur die ersten paar Millimeter weisen ein Gewinde auf. Der Rest des Pins ist gewindelos ausgeführt. Diese Art von herkömmlichen Pins wird in einem herkömmlichen Pedal von unten in das Pedal eingeschraubt, d.h. der herkömmliche senkrechte Pin wird von einer ersten Aufstandsfläche 101 her durch den Pedalkörper 110 geschraubt, sodass das gewindelose Ende des Pins aus ebendieser gegenüberliegenden Aufstandsfläche 102 hinausragt. Ein solcher herkömmlicher senkrechter Pin kann verwendet werden, um einen erfindungsgemäßen Pin 120 am Pedal zu montieren.

Beispielsweise kann es sich bei der in Figur 2 abgebildeten Schraube 104 um einen solchen herkömmlichen senkrechten Pin handeln. Es wird also lediglich die Montageplatte 103 des erfindungsgemäßen Pins 120 zwischen dem herkömmlichen senkrechten Pin (Schraube 104) und der Aufstandsfläche 101 des Pedals 100 angeordnet. Der herkömmliche senkrechte Pin (Schraube 104) wird, wie oben beschrieben, durch die Montageöffnung in der Montageplatte 103 gesteckt und in dem darunterliegenden Gewinde im Pedalkörper 110 festgeschraubt.

Das heißt, es können bisher verwendete herkömmliche senkrechte Pins, die durch den Pedalkörper 110 hindurchgeschraubt werden, verwendet werden, um damit einen erfindungsgemäßen Pin 120 an einem herkömmlichen Pedal zu montieren. Dies bietet eine einfache und absolut anwenderfreundliche Möglichkeit, um herkömmliche Pedale mit den erfindungsgemäßen Pins 120 nachzurüsten.

Eine hier nicht explizit dargestellte Alternative zur Montage des erfindungsgemäßen Pins 120 sieht vor, dass die Schraube 104 von der dem Pin 120 gegenüberliegenden Aufstandsfläche 102 des Pedals 100 her in den Pedalkörper 110 eingeschraubt wird. In diesem Fall wiese der Pedalkörper 110 selbst keine Gewindebohrung, sondern eine einfache gewindelose Durchgangsbohrung, auf. Diese Durchgangsbohrung tritt im Bereich der Montageöffnung der Montageplatte 103 auf der Aufstandsfläche 101, auf der der Pin 120 montiert wird, aus. In der Montageöffnung der Montageplatte 103 kann ein Gewinde vorgesehen sein. Die Schraube 104 könnte dann also von der dem Pin 120 gegenüberliegenden Aufstandsfläche 102 her durch die Durchgangsbohrung gesteckt werden und in das Gewinde der Montageplatte 102 eingreifen. Hierfür muss die Schraube 104 natürlich ein wenig länger sein als die Dicke des Pedalkörpers 110. Der erfindungsgemäße Pin 120 könnte demnach also von unten, d.h. von der dem Pin 120 gegenüberliegenden Aufstandsfläche 102 her, festgeschraubt bzw. montiert werden. Auch in diesem Ausführungsbeispiel kann die Gewindebohrung bzw. das Gewinde in der Montageplatte 103 senkrecht zur Aufstandsfläche 101 des Pedalkörpers 110 verlaufen, sodass die Schraube 104 senkrecht in den Pedalkörper 110 eingeschraubt werden kann.

Der Pedalkörper 110 des erfindungsgemäßen Pedals 100 kann auf der ersten und/oder zweiten Aufstandsfläche 101, 102 eine Aussparung 108 aufweisen, in die die Montageplatte 103 passgenau eingesetzt werden kann. Dies verhindert ein Verdrehen des Pins 120 während der Fahrt. Zudem kann die Montageplatte 103 bündig mit der Oberfläche der jeweiligen Aufstandsfläche 101, 102 abschließen, um somit keine für den Fahrer störenden Erhebungen am Pedal 100 zu haben. Das heißt, die Montageplatte 103 ist bündig im Pedalkörper 110 versenkt, sodass nur der Zahn 121 des Pins 120 aus der jeweiligen Aufstandsfläche 101, 102 herausragt.

In dem in Figur 2 gezeigten Ausführungsbeispiel weist die Montageplatte 103 eine ovale Kontur auf. Außerdem weist die Montageplatte 103 eine einzelne Montageöffnung auf, durch die das Montagemittel 104 (z.B. Schraube) durchgesteckt werden kann. Insbesondere in diesen Fällen, in denen zur Montage des Pins 120 lediglich ein einzelnes Montagemittel 104 genutzt wird, bietet das passgenaue Einsetzen der Montageplatte 103 in die dafür vorgesehene Aussparung 108 im Pedalkörper 110 den Vorteil, dass sich die Montageplatte 103 nicht ungewollt verdrehen kann.

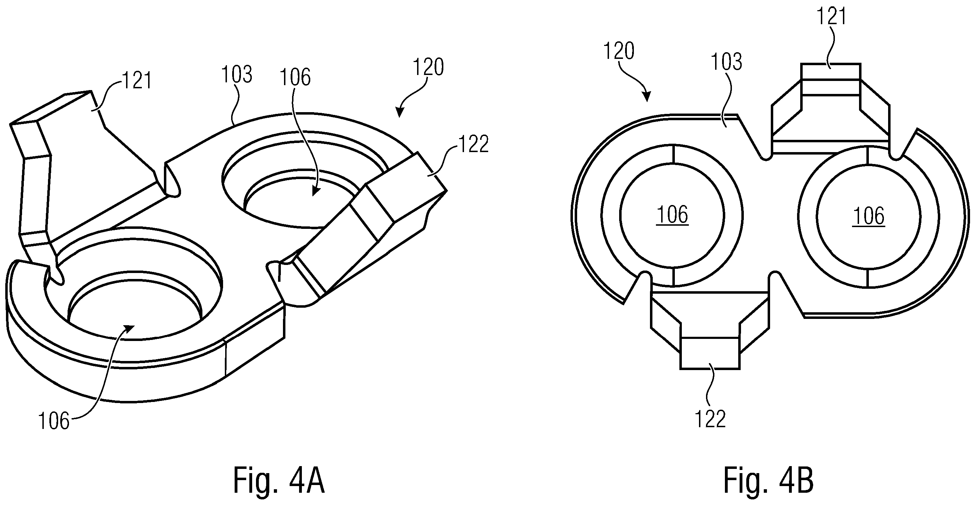

Bezüglich der zuvor erwähnten Montageöffnung sei nun auf die Detailansichten in den Figuren 4A und 4B verwiesen. Hier ist ein erfindungsgemäßer Pin 120 abgebildet. Dieser weist eine Montageplatte 103 auf. Die Montageplatte 103 weist in diesem nicht-limitierenden Ausführungsbeispiel eine ovale Kontur auf. Die Montageplatte 103 weist zudem zwei Montageöffnungen 106 auf. Diese beiden Montageöffnungen 106 sind, in Erstreckungsrichtung der ovalen Kontur gesehen, nebeneinander angeordnet. In jede Montageöffnung 106 ist jeweils ein separates Montagemittel 104 (z.B. Schraube) einsetzbar bzw. durchführbar.

Während also das in Figur 2 gezeigte Ausführungsbeispiel lediglich eine einzelne Montageöffnung gezeigt hat, weist das Ausführungsbeispiel in den Figuren 4A und 4B zwei Montageöffnungen 106 auf. Durch diese Anordnung mit zwei Montageöffnungen 106 kann ebenfalls ein ungewolltes Verdrehen der Montageplatte 103 verhindert werden.

Des Weiteren weist der in den Figuren 4A und 4B gezeigte Pin 120 zwei Zähne 121, 122, und vorzugsweise exakt zwei Zähne 121, 122, auf. Beide Zähne 121, 122 sind jeweils am Außenumfang der Montageplatte 103 angeordnet. Die beiden Zähne 121, 122 können hierbei, wie dargestellt, an gegenüberliegenden Seiten der Montageplatte 103 angeordnet sein. Es ist aber auch denkbar, dass die beiden Zähne 121, 122 auf derselben Seite der Montageplatte 103 angeordnet sind. Die beiden Zähne 121, 122 können sich, wie ebenfalls hier dargestellt, diagonal gegenüberliegen. Es ist aber auch denkbar, dass die beiden Zähne 121, 122 sich direkt (d.h. auf einer gemeinsamen Senkrechten zur Erstreckungsrichtung der ovalen Kontur) gegenüberliegen.

Auch weisen beide Zähne 121, 122 jeweils die erfindungsgemäße Schrägstellung mit dem Neigungswinkel von 5° ≤ α ≤ 45° auf. In dem hier gezeigten Beispiel weisen jedoch die Zähne 121, 122 jeweils in entgegengesetzte Richtungen.

Außerdem können die beiden Zähne 121, 122 spiegelsymmetrisch zueinander angeordnet sein, sodass der erste und der zweite Zahn 121, 122 gegenüber der Senkrechten 130 (siehe Figur 3) jeweils den gleichen Winkel α mit dem gleichen Betrag, aber mit unterschiedlicher Richtung, aufweisen. Das heißt, die beiden Zähne 121, 122 können, wie in den Figuren 4A und 4B abgebildet, die gleiche Schrägstellung bzw. den gleichen Neigungswinkel α aufweisen, dabei aber eben in unterschiedliche Richtungen weisen.

Auch hier können die Zähne 121, 122 einstückig mit der Montageplatte 103 ausgestaltet sein. Beispielsweise kann es sich bei der Montageplatte 103 um ein Blechformteil handeln, das beispielsweise ausgestanzt werden kann. Die beiden Zähne 121, 122 können einstückig mit dem Blechformteil, aus dem auch die Montageplatte 103 besteht, ausgestaltet sein und somit auch dieselbe Blechstärke aufweisen. Hierbei können die beiden Zähne 121, 122 zunächst flach in derselben Ebene wie die Montageplatte 103 liegen. Die beiden Zähne 121, 122 können dann nach oben gebogen werden, und zwar so, dass sie den hierin beschriebenen Neigungswinkel von 5° ≤ α ≤ 45° aufweisen. Dies gilt natürlich auch für Pins 120 mit nur einem einzelnen Zahn 121 (Figur 2), aber natürlich auch für Pins 120 mit mehr als zwei Zähnen 121, 122.

Gemäß dem in den Figuren 4A und 4B abgebildeten Ausführungsbeispiel zeigen also die beiden Zähne 121, 122 jeweils in entgegengesetzte Richtungen. Wenn also der abgebildete Pin 120 auf dem Pedalkörper 110 montiert ist, dann kann einer der beiden Zähne 121, 122 in Fahrtrichtung nach vorne gerichtet sein, und der jeweils andere der beiden Zähne 121, 122 kann dementsprechend in Fahrtrichtung nach hinten gerichtet sein.

Diesbezüglich sei nochmals auf Figur 2 verwiesen. Anstatt des abgebildeten Pins 120 mit nur einem einzelnen Zahn 121 könnte hier also auch der in den Figuren 4A und 4B abgebildete Pin 120 mit zwei Zähnen 121, 122 auf einer der Aufstandsflächen 101, 102 des Pedalkörpers 110 montiert sein. Dabei könnte dann dementsprechend einer der beiden Zähne 121, 122 des Pins 120 in Fahrtrichtung nach vorne zeigen, und der jeweils andere der beiden Zähne 121, 122 des Pins 120 könnte nach hinten zeigen.

In Figur 2 sind zwei erfindungsgemäße Pins 120 mit jeweils einem einzelnen Zahn 121 gezeigt. Hier zeigt der Zahn 121 des einen Pins 120 in Fahrtrichtung nach vorne, und der Zahn 121 des jeweils anderen Pins 120 zeigt in Fahrtrichtung nach hinten. Gemäß dieser Ausführungsform kann also auf derselben Aufstandsfläche 101, 102, auf der auch der mindestens eine Pin 120 montiert ist, mindestens ein weiterer Pin 120 montiert sein, der ebenfalls mindestens bzw. exakt einen Zahn 121 aufweist, der eine Schrägstellung gegenüber der jeweiligen Aufstandsfläche 101, 102 des Fahrradpedals 100 aufweist. Die Schrägstellung dieses Zahns 121 weist ebenfalls einen Neigungswinkel zwischen α = 5° und α = 45° gegenüber der Senkrechten 130 (Figur 3) zu der jeweiligen Aufstandsfläche 101, 102 auf. Das heißt, die einzelnen Zähne 121 beider Pins 120 können beispielweise betragsmäßig den gleichen Neigungswinkel α aufweisen, aber in entgegengesetzte Richtungen zeigen.

Bei den in Figur 2 abgebildeten Pins 120 kann es sich im Wesentlichen um die gleichen Pins 120 handeln. Wie zu sehen ist, sind die beiden Pins jedoch um 180° gedreht zueinander, sodass der Zahn 121 des einen Pins 120 eben nach vorne zeig, während der Zahn 121 des anderen Pins 120 nach hinten zeigt. Somit können also mehrere gleiche Pins 120 auf dem Pedalkörper 110 montiert werden, und zwar so dass die einzelnen Zähne 121 der jeweiligen Pins 120 jeweils in unterschiedliche Richtungen weisen.

Im Übrigen gilt alles, was zuvor unter Bezugnahme auf den in Figur 2 abgebildeten Pin 120 mit einem einzelnen Zahn 121 gesagt wurde, auch für einen Pin 120 mit zwei oder mehr Zähnen 121, 122 (Figuren 4A, 4B).

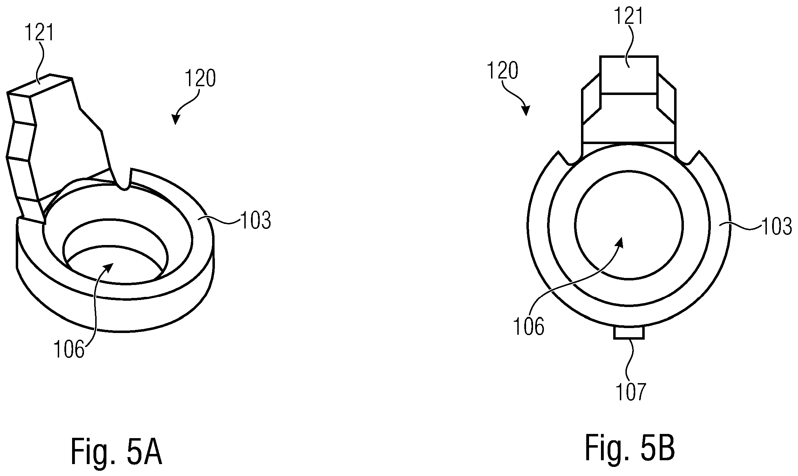

Die bisher diskutierten Pins 120 wiesen eine Montageplatte 103 mit ovaler Kontur auf. Die Figuren 5A und 5B zeigen ein alternatives Ausführungsbeispiel eines erfindungsgemäßen Pins 120 mit einer Montageplatte 103, die eine kreisrunde Kontur aufweist. Die Montageöffnung 106 ist hier im Zentrum der Montageplatte 103 angeordnet.

Der Pin 120 kann einen einzelnen Zahn 121 aufweisen, der die erfindungsgemäße Schrägstellung gegenüber der Senkrechten 130 mit dem Neigungswinkel zwischen α = 5° und α = 45° aufweist.

Auch dieser Pin 120 kann als ein Blechformteil ausgestaltet sein, bei dem der einzelne Zahn 121 einstückig mit der Montageplatte 103 ausgestaltet und in dem besagten Neigungswinkel α hochgebogen ist.

Der Pedalkörper 110 kann in seiner ersten und/oder zweiten Aufstandsfläche 101, 102 wiederum eine Aussparung 108 (Figur 2) aufweisen, in die die Montageplatte 103 passgenau einsetzbar ist. In diesem Fall würde die passgenaue Aussparung 108 ebenfalls eine kreisrunde Kontur aufweisen. Der in den Figuren 5A und 5B gezeigte Pin 120 hätte im Vergleich zu dem in Figur 2 gezeigten Pin 120 den Vorteil, dass dieser, aufgrund seiner kreisrunden Kontur, in einer beliebigen Position am Pedal 100 montierbar ist, sodass der einzelne Zahn 121 des kreisrunden Pins 120 in eine beliebige Richtung gerichtet sein kann.

Dies kann gewollt, oder aber auch ungewollt sein. Beispielsweise kann es gewünscht sein, dass der kreisrunde Pin 120 ausschließlich in einer bestimmten vorgegebenen Position auf dem Pedalkörper 110 montierbar ist, in der beispielsweise der Zahn 121 des Pins 120 entweder in Fahrtrichtung nach vorne oder nach hinten gerichtet ist. Hierfür kann beispielsweise die Montageplatte 103 eine Montagehilfe 107 aufweisen, die die Justierung des Pins 120 auf dem Pedalkörper 110 vereinfacht. Diese Montagehilfe 107 kann beispielsweise in Form eines hervorstehenden Abschnitts realisiert sein, der vom Außenumfang der Montageplatte 103 absteht. Diese Montagehilfe 107 bzw. der hervorstehende Abschnitt, kann in Form einer Feder (im Sinne einer Feder-Nut-Passung) ausgestaltet sein, die am Außenumfang der Montageplatte 103 angeordnet sein kann, so wie dies rein beispielhaft in Figur 5B gezeigt ist.

Alternativ oder zusätzlich kann in dem Pedalkörper 110 eine Montagehilfe vorgesehen sein. Beispielsweise kann im Pedalkörper eine geometrisch passende Nut vorgesehen sein, in die die Feder 107 der Montageplatte 103 einsetzbar ist. Somit kann der Pin 120 nur in einer vorgegebenen Position auf dem Pedalkörper 110 montiert werden.

Die Montagehilfe 107 ist insbesondere bei kreisrunden Montageplatten 103 von Vorteil, da die Pins 120 mit kreisrunder Montageplatte 103 ansonsten in beliebigen Positionen auf dem Pedalkörper 110 montiert werden können. Eine Montagehilfe 107 kann aber auch bei Montageplatten 103 mit anderen bzw. beliebigen geometrischen Formen vorstellbar sein.

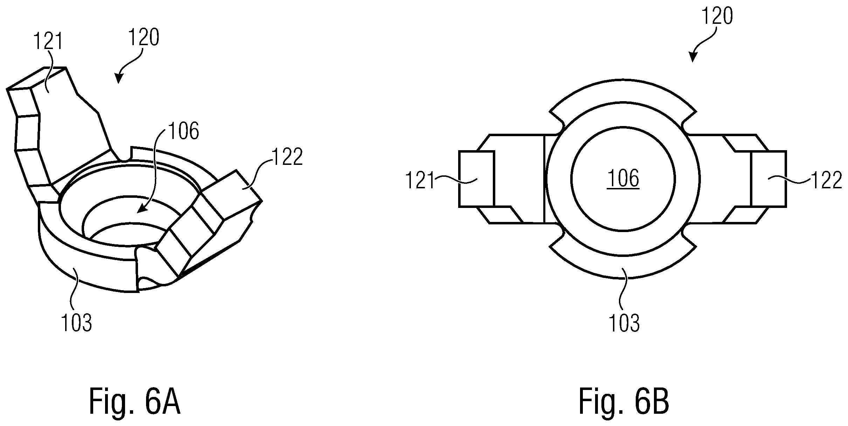

Die Figuren 6A und 6B zeigen ein weiteres Ausführungsbeispiel eines erfindungsgemäßen Pins 120. Dieser Pin 120 unterscheidet sich von den anderen Ausführungsformen unter anderem dadurch, dass dieser Pin 120 zwei Zähne 121, 122, und vorzugsweise exakt zwei Zähne 121,122, aufweist. Ansonsten gilt alles, was zuvor bezüglich der anderen Ausführungsformen erwähnt wurde, gleichsam auch für diese Ausführungsform des Pins 120.

Insbesondere sind beide Zähne 121, 122 in der besagten Schrägstellung mit dem Neigungswinkel α zwischen α = 5° und α = 45° angeordnet. Beide Zähne 121, 122 können einstückig mit der Montageplatte 103 ausgestaltet sein. Beide Zähne 121, 122 können am Außenumfang der Montageplatte 103 angeordnet sein. Die beiden Zähne 121, 122 können in jeweils entgegengesetzte Richtungen weisen, z.B. in Fahrtrichtung nach vorne bzw. nach hinten. Beide Zähne 121, 122 können spiegelsymmetrisch zueinander angeordnet sein.

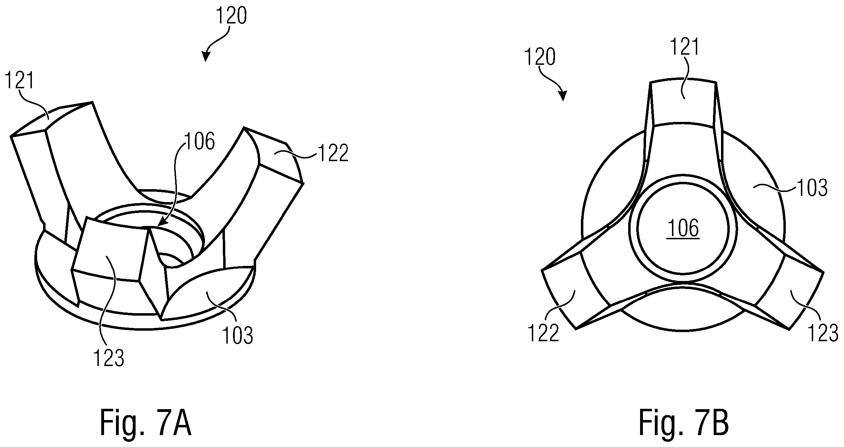

Die Figuren 7A und 7B zeigen eine weiteres Ausführungsbeispiel eines erfindungsgemäßen Pins 120. Dieser Pin 120 unterscheidet sich von den anderen Ausführungsformen unter anderem dadurch, dass dieser Pin 120 drei Zähne 121, 122, 123 und vorzugsweise exakt drei Zähne 121, 122, 123 aufweist. Ansonsten gilt alles, was zuvor bezüglich der anderen Ausführungsformen erwähnt wurde, gleichsam auch für diese Ausführungsform des Pins 120.

Gemäß dieser Ausführungsform weist der Pin 120 also einen zweiten Zahn 122 und einen dritten Zahn 123 auf, die ebenfalls jeweils eine Schrägstellung gegenüber der jeweiligen Aufstandsfläche 101, 102 des Fahrradpedals 100 aufweisen. Die Schrägstellung des zweiten Zahns 122 sowie die Schrägstellung des dritten Zahns 123 weisen dabei ebenfalls jeweils den besagten Neigungswinkel α zwischen α = 5° und α = 45° gegenüber der Senkrechten 130 zur jeweiligen Aufstandsfläche 101,102 auf.

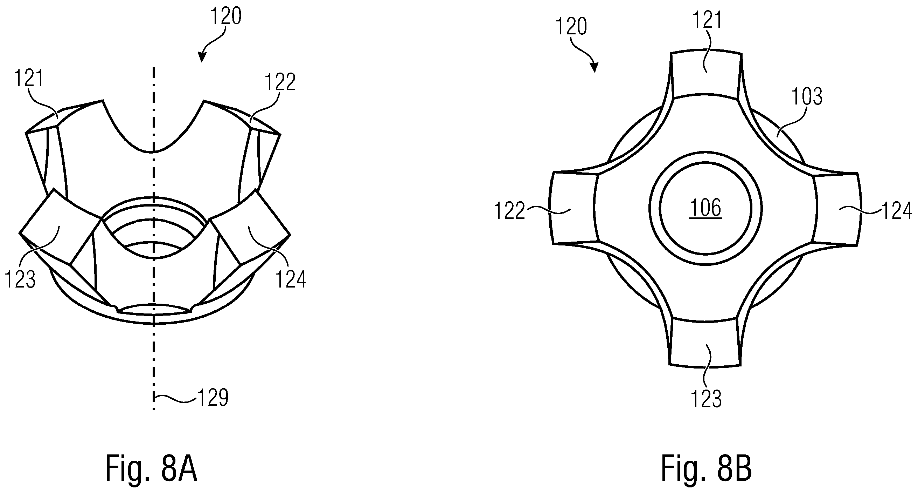

Die Figuren 8A und 8B zeigen eine weiteres Ausführungsbeispiel eines erfindungsgemäßen Pins 120. Dieser Pin 120 unterscheidet sich von den anderen Ausführungsformen unter anderem dadurch, dass dieser Pin 120 vier Zähne 121, 122, 123, 124, und vorzugsweise exakt vier Zähne 121, 122, 123, 124, aufweist. Ansonsten gilt alles, was zuvor bezüglich der anderen Ausführungsformen erwähnt wurde, gleichsam auch für diese Ausführungsform des Pins 120.

Gemäß dieser Ausführungsform weist der Pin 120 also einen zweiten Zahn 122, einen dritten Zahn 123 und einen vierten Zahn 124 auf, die alle ebenfalls jeweils eine Schrägstellung gegenüber der jeweiligen Aufstandsfläche 101, 102 des Fahrradpedals 100 aufweisen, wobei die jeweiligen Schrägstellungen des zweiten, dritten und vierten Zahns 122, 123, 124 ebenfalls jeweils einen Winkel zwischen α = 5° und α = 45° gegenüber der Senkrechten 130 zu der jeweiligen Aufstandsfläche 101, 102 aufweisen.

Bei allen hierin beschriebenen Ausführungsformen eines Pins 120 mit mehr als einem Zahn können die Zähne 121, 122, 123, 124 konzentrisch um eine gemeinsame Mittelachse 129 herum angeordnet sein, wobei diese Mittelachse 129 senkrecht zu der jeweiligen Aufstandsfläche 101, 102 des Pedalkörpers 110 steht. Eine solche Mittelachse 129 ist beispielhaft in Figur 8A eingezeichnet.

Alternativ oder zusätzlich können die Zähne 121, 122, 123, 124 rotationssymmetrisch um die Mittelachse 129 herum angeordnet sein, d.h. alle Zähne 121, 122, 123, 124 weisen untereinander jeweils den gleichen Abstand auf. So zeigen beispielsweise die Figuren 7A und 7B einen Pin 120 mit drei Zähnen 121, 122, 123, die alle um jeweils 120° zueinander versetzt angeordnet sind. Die Figuren 8A und 8B zeigen einen Pin 120 mit vier Zähnen 121, 122, 123, 124, die alle um jeweils 90° zueinander versetzt angeordnet sind.

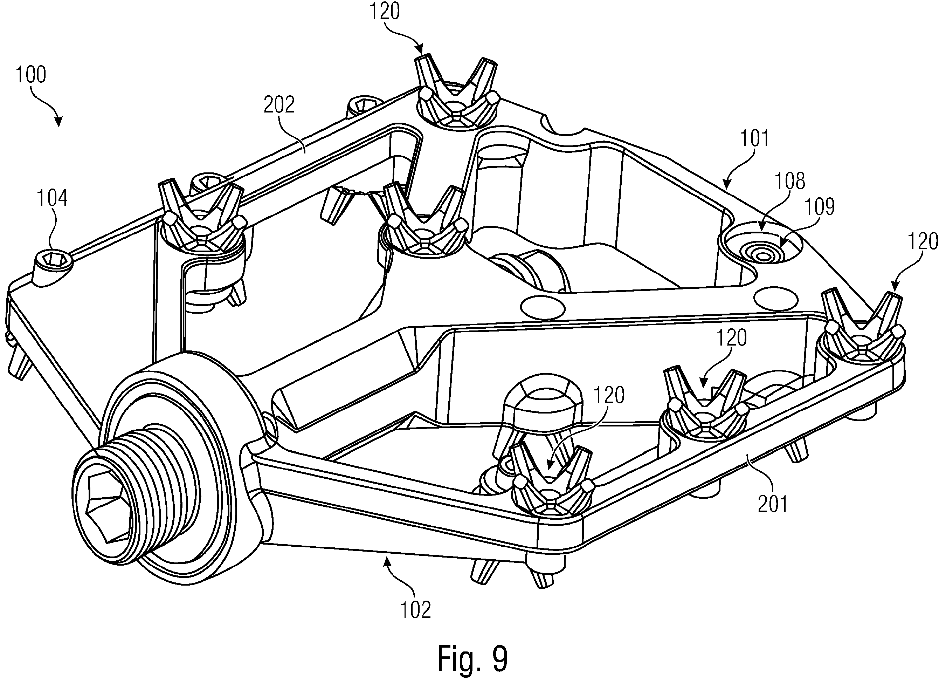

Figur 9 zeigt eine Perspektivansicht eines erfindungsgemäßen Pedals 100 mit einer Vielzahl erfindungsgemäßer Pins 120. Genauer gesagt ist eine Vielzahl von Pins 120 auf der ersten Aufstandsfläche 101 montiert, und auf der gegenüberliegenden zweiten Aufstandsfläche 102 ist ebenfalls eine Vielzahl an Pins 120 montiert. Hierbei handelt es sich rein beispielhaft um die in den Figuren 8A und 8B gezeigten Pins 120 mit je vier Zähnen 121, 122, 123, 124.

Zur Montage der Pins 120 können auch hier wieder geeignete Montagemittel 104 verwendet werden. In diesem nicht-limitierenden Ausführungsbeispiel handelt es sich um Imbusschrauben. Die Imbusschrauben 104 können, wie in Figur 9 dargestellt, von der dem Pin 120 gegenüberliegenden Aufstandsfläche 101, 102 her durch den Pedalkörper 110 geschraubt werden. In diesem Fall kann die Montageöffnung 106 (Figur 8B) eines jeden Pins 120 ein Schraubgewinde aufweisen, in das die Schraube 104 eingeschraubt werden kann. Unterhalb der Montageöffnung 106 kann der Pedalkörper 110 eine durchgehende Bohrung aufweisen, durch die das Montagemittel 104 hindurchgesteckt werden kann. Beispielsweise kann ein herkömmlicher senkrechter Pin als Montagemittel 104 benutzt werden, um einen erfindungsgemäßen Pin 120 am Pedal 100 zu montieren. Dabei wäre es denkbar, dass das dem Schraubenkopf gegenüberliegende Ende des herkömmlichen Pins 104 aus der Montageöffnung 106 des erfindungsgemäßen Pins 120 herausragt. Das heißt, der herkömmliche Pin 104 würde aus der Montageöffnung 106 (hier mittig) herausragen, und zwar in die gleiche Richtung wie die vier Zähne 121, 122, 123, 124 des erfindungsgemäßen Pins 120.

Alternativ wäre es aber auch hier wieder denkbar, dass das Montagemittel 104 von oben in den erfindungsgemäßen Pin 120 eingeschraubt wird. Das heißt, das Montagemittel 104, z.B. eine hier abgebildete Imbusschraube, könnte von derselben Aufstandsfläche 101, 102 her, auf der auch der Pin 120 angeordnet ist, durch die Montageöffnung 106 hindurchgeführt werden. Im Pedalkörper 110 könnte unterhalb der Montageöffnung 106 ein Schraubgewinde vorgesehen sein, in das die Schraube 104 dann hineingeschraubt werden kann.

In Figur 9 ist rein beispielhaft ein solches Schraubgewinde 109 gezeigt, das in den Pedalkörper 110 eingeschnittene ist. Das Schraubgewinde 109 ist unterhalb der Montageöffnung 106 des Pins 120 angeordnet. Außerdem ist hier auch nochmals eine der zuvor erwähnten Aussparungen 108 im Pedalkörper 110 zu sehen. Die geometrische Form der Aussparung 108 ist komplementär zur geometrischen Form der Montageplatte 103 des Pins 120 ausgestaltet, sodass der Pin 120 passgenau in diese Aussparung 108 eingesetzt werden kann.

Wie eingangs bereits erwähnt wurde, können die erfindungsgemäßen Pins 120 zusammen mit herkömmlichen senkrechten Pins gemeinsam auf einem Pedal 100 montiert werden. Da die erfindungsgemäßen Pins 120 deutlich mehr Grip in unterschiedliche Richtungen bieten, ist es vorteilhaft, wenn auf der ersten und/oder zweiten Aufstandsfläche 101, 102 zumindest entlang des äußeren Umfangs des Pedalkörpers 110 ein oder mehrere erfindungsgemäße Pins 120 angeordnet sind.

Beispielsweise kann mindestens ein erfindungsgemäßer Pin 120 auf der, in Fahrtrichtung gesehenen, Hinterkante 201 des Pedalkörpers 110 und/oder mindestens ein erfindungsgemäßer Pin 120 auf der, in Fahrtrichtung gesehenen, Vorderkante 202 des Pedalkörpers 110 angeordnet sein.

Abschließend sei zu erwähnen, dass ein erfindungsgemäßer Pin 120 auch mehr als die hier beschriebenen vier schrägen Zähne 121, 122, 123, 124 aufweisen kann. Außerdem können die schrägen Zähne, unabhängig von deren Anzahl, sowohl an kreisrunden als auch an ovalen Montageplatten 103 ausgebildet sein. Die Montageplatte 103 kann außerdem sämtliche andere geometrische Formen aufweisen, z.B. rechteckig, quadratisch, vieleckig.

Die oben beschriebenen Ausführungsbeispiele stellen lediglich eine Veranschaulichung der Prinzipien des hierin beschriebenen innovativen Konzepts dar. Es versteht sich, dass Modifikationen und Variationen der hierin beschriebenen Anordnungen und Einzelheiten anderen Fachleuten einleuchten werden. Deshalb ist beabsichtigt, dass das hierin beschriebene Konzept lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

## Patentansprüche

1. Fahrradpedal (100) aufweisend:
einen Pedalkörper (110) mit einer ersten Aufstandsfläche (101) und einer gegenüberliegenden zweiten Aufstandsfläche (102),
wobei auf der ersten Aufstandsfläche (101) eine Vielzahl von Pins (120, 140) angeordnet ist, und
wobei auf der zweiten Aufstandsfläche (102) eine Vielzahl von Pins (120, 140) angeordnet ist,
wobei mindestens einer der Pins (120) einen Zahn (121) aufweist, **dadurch gekennzeichnet, dass** der Zahn eine Schrägstellung gegenüber der jeweiligen Aufstandsfläche (101, 102) des Fahrradpedals (100) aufweist,
wobei die Schrägstellung des Zahns einen Winkel (α) zwischen α = 5° und α = 45° gegenüber einer Senkrechten (130) zu der jeweiligen Aufstandsfläche (101,102), auf der der Pin (120) montiert ist, aufweist.

2. Fahrradpedal (100) nach Anspruch 1,
wobei der mindestens eine Pin (120) eine Montageplatte (103) aufweist, mittels derer der Pin (120) an der ersten oder zweiten Aufstandsfläche (101, 102) des Pedalkörpers (110) montierbar ist,
wobei der Zahn (121) am Außenumfang der Montageplatte (103) angeordnet ist, und
wobei der Zahn (121) in Fahrtrichtung nach hinten oder nach vorne gerichtet ist, wenn der Pin (120) auf dem Pedalkörper (110) montiert ist.

3. Fahrradpedal (100) nach Anspruch 2,
wobei der Zahn (121) einstückig mit der Montageplatte (103) ausgestaltet ist, und
wobei der Zahn (121) in der besagten Schrägstellung mit dem Winkel (α) zwischen α = 5° und α = 45° auf der Montageplatte (103) angeordnet ist.

4. Fahrradpedal (100) nach einem der vorhergehenden Ansprüche,
wobei auf derselben Aufstandsfläche (101, 102), auf der auch der mindestens eine Pin (120) montiert ist, mindestens ein weiterer Pin (120) montiert ist, der ebenfalls einen Zahn (121) aufweist, der eine Schrägstellung gegenüber der jeweiligen Aufstandsfläche (101, 102) des Fahrradpedals (100) aufweist,
wobei die Schrägstellung dieses Zahns (121) ebenfalls einen Winkel (α) zwischen α = 5° und α = 45° gegenüber der Senkrechten (130) zu der jeweiligen Aufstandsfläche (101, 102) aufweist, und
wobei die beiden Pins (120) derart auf dem Pedalkörper (110) montiert sind, dass der Zahn (121) des einen Pins (120) in Fahrtrichtung nach vorne gerichtet ist, und dass der Zahn (121) des anderen Pins (120) in Fahrtrichtung nach hinten gerichtet ist.

5. Fahrradpedal (100) nach einem der Ansprüche 1 bis 3,
wobei der mindestens eine Pin (120) einen zweiten Zahn (122) aufweist, der ebenfalls eine Schrägstellung gegenüber der jeweiligen Aufstandsfläche (101, 102) des Fahrradpedals (100) aufweist,
wobei die Schrägstellung des zweiten Zahns (122) ebenfalls einen Winkel (α) zwischen α = 5° und α = 45° gegenüber der Senkrechten (130) zu der jeweiligen Aufstandsfläche (101, 102) aufweist,
wobei der erste und der zweite Zahn (121, 122) jeweils in entgegengesetzte Richtungen zeigen, und
wobei der erste und der zweite Zahn (121, 122) spiegelsymmetrisch zueinander angeordnet sind, sodass der erste und der zweite Zahn (121, 122) gegenüber der Senkrechten (130) jeweils den gleichen Winkel (α) mit dem gleichen Betrag, aber mit unterschiedlicher Richtung, aufweisen.

6. Fahrradpedal (100) nach Anspruch 5,
wobei der mindestens eine Pin (120) eine Montageplatte (103) aufweist, mittels derer der Pin (120) an der ersten oder zweiten Aufstandsfläche (101, 102) des Pedalkörpers (110) montierbar ist,
wobei die beiden Zähne (121, 122) jeweils am Außenumfang der Montageplatte (103), und gegenüberliegend voneinander, angeordnet sind,
wobei die beiden Zähne (121, 122) einstückig mit der Montageplatte (103) ausgestaltet sind,
wobei jeder der beiden Zähne (121, 122) jeweils in der besagten Schrägstellung mit dem Winkel (α) zwischen α = 5° und α = 45° auf der Montageplatte (103) angeordnet ist, und
wobei einer der beiden Zähne (121, 122) in Fahrtrichtung nach vorne gerichtet ist, und der jeweils andere der beiden Zähne (121, 122) in Fahrtrichtung nach hinten gerichtet ist,
wenn der Pin (120) auf dem Pedalkörper (110) montiert ist.

7. Fahrradpedal (100) nach Anspruch 1,
wobei der mindestens eine Pin (120) einen zweiten Zahn (122) und einen dritten Zahn (123) aufweist, die ebenfalls jeweils eine Schrägstellung gegenüber der jeweiligen Aufstandsfläche (101, 102) des Fahrradpedals (100) aufweisen,
wobei die Schrägstellung des zweiten Zahns (122) sowie die Schrägstellung des dritten Zahns (123) ebenfalls jeweils einen Winkel zwischen α = 5° und α = 45° gegenüber der Senkrechten (130) zu der jeweiligen Aufstandsfläche (101, 102) aufweisen.

8. Fahrradpedal (100) nach Anspruch 1,
wobei der mindestens eine Pin (120) einen zweiten Zahn (122), einen dritten Zahn (123) und einen vierten Zahn (124) aufweist, die alle ebenfalls jeweils eine Schrägstellung gegenüber der jeweiligen Aufstandsfläche (101, 102) des Fahrradpedals (100) aufweisen,
wobei die jeweiligen Schrägstellungen des zweiten, dritten und vierten Zahns (122, 123, 124) ebenfalls jeweils einen Winkel zwischen α = 5° und α = 45° gegenüber der Senkrechten (130) zu der jeweiligen Aufstandsfläche (101, 102) aufweisen.

9. Fahrradpedal (100) nach Anspruch 7 oder 8,
wobei die Zähne (121, 122, 123, 124) konzentrisch um eine gemeinsame Mittelachse (129) herum angeordnet sind,
wobei diese Mittelachse (129) senkrecht zu der jeweiligen Aufstandsfläche (101, 102) des Pedalkörpers (110) steht, und
wobei die Zähne (121, 122, 123, 124) rotationssymmetrisch um die Mittelachse (129) herum angeordnet sind.

10. Fahrradpedal (100) nach einem der Ansprüche 7 bis 9,
wobei der mindestens eine Pin (120) eine Montageplatte (103) aufweist, mittels derer der Pin (120) an der ersten oder zweiten Aufstandsfläche (101, 102) des Pedalkörpers (110) montierbar ist,
wobei die Zähne (121, 122, 123, 124) jeweils am Außenumfang der Montageplatte (103) angeordnet sind,
wobei die Zähne (121, 122, 123, 124) einstückig mit der Montageplatte (103) ausgestaltet sind,
wobei jeder der Zähne (121, 122, 123, 124) jeweils in der besagten Schrägstellung mit dem Winkel zwischen α = 5° und α = 45° auf der Montageplatte (103) angeordnet ist, und
wobei mindestens einer der Zähne (121, 122, 123, 124) in Fahrtrichtung nach vorne gerichtet ist, und/oder mindestens ein anderer der Zähne (121, 122, 123, 124) in Fahrtrichtung nach hinten gerichtet ist,
wenn der Pin (120) an dem Pedalkörper (110) montiert ist.

11. Fahrradpedal (100) nach Anspruch 10,
wobei der Pin (120) und/oder der Pedalkörper (110) eine Montagehilfe (107) aufweist, die es ermöglicht, den Pin (120) ausschließlich in einer vorgegebenen Position auf dem Pedalkörper (110) zu montieren, in der einer der Zähne (121, 122, 123, 124) in Fahrtrichtung nach vorne und ein anderer der Zähne (121, 122, 123, 124) in Fahrtrichtung nach hinten gerichtet ist.

12. Fahrradpedal (100) nach einem der Ansprüche 2, 6 oder 10,
wobei die Montageplatte (103) eine Montageöffnung (106) aufweist, in die ein separates Montagemittel (104) einführbar ist, mittels dem der Pin (120) an dem Pedalkörper (110) montierbar ist,
wobei die Montageplatte (103) eine kreisrunde Kontur aufweist, und
wobei die Montageöffnung (106) im Zentrum der Montageplatte (103) angeordnet ist.

13. Fahrradpedal (100) nach Anspruch 12,
wobei das Montagemittel (104) eine Schraube ist, wobei
entweder die in der Montageplatte (103) vorgesehene Montageöffnung (105) ein Schraubgewinde aufweist, und die Schraube (104) von der dem Pin (120) gegenüberliegenden Aufstandsfläche (101, 102) des Pedalkörpers (110) her in das Schraubgewinde einschraubbar ist,
oder wobei der Pedalkörper (110) unterhalb der in der Montageplatte (103) vorgesehenen Montageöffnung eine Bohrung mit einem Schraubgewinde aufweist, und die Schraube (104) von derselben Aufstandsfläche (101, 102) des Pedalkörpers (110) her in das Schraubgewinde einschraubbar ist, auf der auch der Pin (120) angeordnet ist.

14. Fahrradpedal (100) nach einem der Ansprüche 2, 6 oder 10,
wobei die Montageplatte (103) zwei nebeneinander angeordnete Montageöffnungen (106) aufweist, in die jeweils ein separates Montagemittel (104) einführbar ist, mittels dem der Pin (120) an dem Pedalkörper (110) montierbar ist,
wobei die Montageplatte (103) eine ovale Kontur aufweist, und
wobei die beiden Montageöffnungen (106) entlang der Erstreckungsrichtung des Ovals nebeneinander angeordnet sind.

15. Fahrradpedal (100) nach einem der Ansprüche 2, 6, 10 oder 12 bis 14,
wobei der Pedalkörper (110) in der ersten und/oder zweiten Aufstandsfläche (101, 102) eine Aussparung (108) aufweist, in die die Montageplatte (103) passgenau einsetzbar ist, und
wobei die Montageplatte (103) flach auf der jeweiligen Aufstandsfläche (101, 102) des Fahrradpedals (100) aufliegt und parallel zu der jeweiligen Aufstandsfläche (101, 102) ausgerichtet ist.

16. Austauschbarer Pin (120) für ein Fahrradpedal (100),
wobei der Pin (120) mindestens einen Zahn (121) aufweist,
**dadurch gekennzeichnet, dass** der Pin (120) eine Montageplatte (103) aufweist, mittels derer der Pin (120) an einer Aufstandsfläche (101, 102) des Fahrradpedals (100) montierbar ist,
wobei der Zahn (121) derart an der Montageplatte (103) angeordnet ist, dass der Zahn (121) eine Schrägstellung gegenüber der Aufstandsfläche (101, 102) des Fahrradpedals (100) aufweist, wenn der Pin (120) an dem Fahrradpedal (100) montiert ist, und
wobei die Schrägstellung des Zahns (121) einen Winkel (α) zwischen α = 5° und α = 45° gegenüber einer Senkrechten (130) zur Aufstandsfläche (101, 102) des Fahrradpedals (100) aufweist.

## Claims

1. Bicycle pedal (100) comprising:
a pedal body (110) with a first contact area (101) and an opposite second contact area (102),
wherein a plurality of pins (120, 140) is arranged on the first contact area (101), and
wherein a plurality of pins (120, 140) is arranged on the second contact area (102),
wherein at least one of the pins (120) comprises a tooth (121),
**characterized in that** the tooth comprises a tilt relative the respective contact area (101) of the bicycle pedal (100),
wherein the tilt of the tooth comprises an angle (α) between α = 5° and α = 45° relative to a perpendicular line (130) with respect to the respective contact area (101, 102) on which the pin (120) is mounted.

2. Bicycle pedal (100) according to claim 1,
wherein the at least one pin (120) comprises a mounting plate (103) by means of which the pin (120) is mountable to the first or second contact area (101, 102) of the pedal body (110),
wherein the tooth (121) is arranged at the outer circumference of the mounting plate (103), and
wherein the tooth (121) is directed towards the rear or the front in the direction of travel when the pin (120) is mounted on the pedal body (110).

3. Bicycle pedal (100) according to claim 2,
wherein the tooth (121) is configured so as to be integral with the mounting plate (103), and
wherein the tooth (121) is arranged on the mounting plate (103) in said tilt with the angle (α) between α = 5° and α = 45°.

4. Bicycle pedal (100) according to any of the preceding claims,
wherein, on the same contact area (101, 102) on which the at least one pin (120) is mounted, at least one further pin (120) is mounted, also comprising a tooth (121) comprising a tilt relative to the respective contact area (101, 102) of the bicycle pedal (100),
wherein the tilt of this tooth (121) also comprises an angle (α) between α = 5° and α = 45° relative to the perpendicular line (130) with respect to the respective contact area (101, 102), and
wherein the two pins (120) are mounted on the pedal body (110) such that the tooth (121) of the one pin (120) is directed towards the front in the direction of travel, and such that the tooth (121) of the other pin (120) is directed towards the rear in the direction of travel.

5. Bicycle pedal (100) according to any of claims 1 to 3,
wherein the at least one pin (120) comprises a second tooth (122) also comprising a tilt relative to the respective contact area (101, 102) of the bicycle pedal (100),
wherein the tilt of the second tooth (122) also comprises an angle (α) between α = 5° and α = 45° relative to the perpendicular line (130) with respect to the respective contact area (101, 102),
wherein the first and the second tooth (121, 122) point in opposite directions, and
wherein the first and the second tooth (121, 122) are arranged in a mirror-symmetrical way with respect to each other so that the first and the second tooth (121, 122) each comprise the same angle (α) with the same size, but with a different direction, relative to the perpendicular line (130).

6. Bicycle pedal (100) according to claim 5,
wherein the at least one pin (120) comprises a mounting plate (103) by means of which the pin (120) is mountable to the first or the second contact area (101, 102) of the pedal body (110),
wherein the two teeth (121, 122) are each arranged at the outer circumference of the mounting plate (103) and opposite each other,
wherein the two teeth (121, 122) are configured so as to be integral with the mounting plate (103),
wherein each of the two teeth (121, 122) is arranged on the mounting plate (103) in said tilt with the angle (α) between α = 5° and α = 45°, and
wherein one of the two teeth (121, 122) is directed towards the front in the direction of travel, and the respectively other one of the two teeth (121, 122) is directed towards the rear in the direction of travel,
when the pin (120) is mounted on the pedal body (110).

7. Bicycle pedal (100) according to claim 1,
wherein the at least one pin (120) comprises a second tooth (122) and a third tooth (123), each also comprising a tilt relative to the respective contact area (101, 102) of the bicycle pedal (100),
wherein the tilt of the second tooth (122) and the tilt of the third tooth (123) also each comprise an angle between α = 5° and α = 45° relative to the perpendicular line (130) with respect to the respective contact area (101, 102).

8. Bicycle pedal (100) according to claim 1,
wherein the at least one pin (120) comprises a second tooth (122), a third tooth (123), and a fourth tooth (124), all each also comprising a tilt relative to the respective contact area (101, 102) of the bicycle pedal (100),
wherein the respective tilt of the second, the third, and the fourth tooth (122, 123, 124) also each comprise an angle between α = 5° and α = 45° relative to the perpendicular line (130) with respect to the respective contact area (101, 102).

9. Bicycle pedal (100) according to claim 7 or 8,
wherein the teeth (121, 122, 123, 124) are arranged so as to be concentric around a mutual center axis (129),
wherein this center axis (129) is perpendicular with respect to the respective contact area (101, 102) of the pedal body (110), and
wherein the teeth (121, 122, 123, 124) are arranged so as to be rotational-symmetrical around the center axis (129).

10. Bicycle pedal (100) according to any of claims 7 to 9,
wherein the at least one pin (120) comprises a mounting plate (103) by means of which the pin (120) is mountable to the first or second contact area (101, 102) of the pedal body (110),
wherein the teeth (121, 122, 123, 124) are each arranged at the outer circumference of the mounting plate (103),
wherein the teeth (121, 122, 123, 124) are each configured so as to be integral with the mounting plate (103),
wherein each of the teeth (121, 122, 123, 124) is arranged on the mounting plate (103) in said tilt with the angle between α = 5° and α = 45°, and
wherein at least one of the teeth (121, 122, 123, 124) is directed towards the front in the direction of travel, and/or at least another one of the teeth (121, 122, 123, 124) is directed towards the rear in the direction of travel,
when the pin (120) is mounted to the pedal body (110).

11. Bicycle pedal (100) according to claim 10,
wherein the pin (120) and/or the pedal body (110) comprises a mounting aid (107) that enables mounting the pin (120) on the pedal body (110) exclusively in a predetermined position in which one of the teeth (121, 122, 123, 124) points towards the front in the direction of travel, and another one of the teeth (121, 122, 123, 124) points towards the rear in the direction of travel.

12. Bicycle pedal (100) according to any of claims 2, 6, or 10,
wherein the mounting plate (103) comprises a mounting opening (106) into which separate mounting means (104) are insertable, by means of which the pin (120) is mountable to the pedal body (110),
wherein the mounting plate (103) has a circular contour, and
wherein the mounting opening (106) is arranged in the center of the mounting plate (103).

13. Bicycle pedal (100) according to claim 12,
wherein the mounting means (104) is a screw, wherein
the mounting opening (105) provided in the mounting plate (103) comprises a screw thread, and the screw (104) is screwable into the screw thread coming from the contact area (101, 102), opposite to the pin (120), of the pedal body (110),
or wherein the pedal body (110) comprises, below the mounting opening provided in the mounting plate (103), a drill hole with a screw thread, and the screw (104) is screwable into the screw thread coming from the same contact area (101, 102) of the pedal body (110) having also arranged thereon the pin (120).

14. Bicycle pedal (100) according to any of claims 2, 6, or 10,
wherein the mounting plate (103) comprises two mounting openings (106) arranged next to each other, into which separate mounting means (104) are insertable, by means of which the pin (120) is mountable to the pedal body (110),
wherein the mounting plate (103) has an oval contour, and
wherein the two mounting openings (106) are arranged next to each other along the extension direction of the oval.

15. Bicycle pedal (100) according to any of claims 2, 6, 10, or 12 to 14,
wherein the pedal body (110) comprises, in the first and/or second contact area (101, 102), a recess (108) into which the mounting plate (103) is insertable in a precise way, and
wherein the mounting plate (103) rests flat on the respective contact area (101, 102) of the bicycle pedal (100) and is orientated so as to be parallel to the respective contact area (101, 102).

16. Replaceable pin (120) for a bicycle pedal (100),
wherein the pin (120) comprises at least one tooth (121),
**characterized in that** the pin (120) comprises a mounting plate (103) by means of which the pin (120) is mountable to a contact area (101, 102) of the bicycle pedal (100),
wherein the tooth (121) is arranged at the mounting plate (103) such that the tooth (121) comprises a tilt relative to the contact area (101, 102) of the bicycle pedal (100) when the pin (120) is mounted to the bicycle pedal (100), and
wherein the tilt of the tooth (121) comprises an angle (α) between α = 5° and α = 45° relative to the perpendicular line (130) with respect to the contact area (101, 102) of the bicycle pedal (100).

## Revendications

1. Pédale de bicyclette (100) comprenant :
un corps de pédale (110) avec une première surface d'appui (101) et une deuxième surface d'appui opposée (102),
une pluralité de picots (120, 140) étant disposés sur la première surface d'appui (101), et
une pluralité de picots (120, 140) étant disposés sur la deuxième surface d'appui (102),
au moins un des picots (120) présentant une dent (121), **caractérisée en ce que** la dent présente une inclinaison par rapport à la surface d'appui respective (101, 102) de la pédale de bicyclette (100),
l'inclinaison de la dent présentant un angle (α) compris entre α = 5° et α = 45° par rapport à une perpendiculaire (130) à la surface d'appui respective (101,102) sur laquelle est monté le picot (120).

2. Pédale de bicyclette (100) selon la revendication 1,
dans laquelle ledit au moins un picot (120) comporte une plaque de montage (103) au moyen de laquelle ledit picot (120) peut être monté sur la première ou la deuxième surface d'appui (101, 102) du corps de pédale (110),
dans laquelle la dent (121) est disposée sur la circonférence extérieure de la plaque de montage (103), et
dans laquelle la dent (121) est orientée vers l'arrière ou vers l'avant dans le sens de la marche lorsque le picot (120) est monté sur le corps de pédale (110).

3. Pédale de bicyclette (100) selon la revendication 2,
dans laquelle la dent (121) est formée d'une seule pièce avec la plaque de montage (103), et
dans laquelle la dent (121) est disposée sur la plaque de montage (103) dans ladite inclinaison avec un angle (α) compris entre α = 5° et α = 45°.

4. Pédale de bicyclette (100) selon l'une des revendications précédentes,
dans laquelle, sur la même surface d'appui (101, 102) sur laquelle est également monté ledit au moins un picot (120), au moins un autre picot (120) est monté, lequel comporte également une dent (121) présentant une inclinaison par rapport à la surface d'appui respective (101, 102) de la pédale de bicyclette (100),
dans laquelle l'inclinaison de cette dent (121) présente également un angle (α) compris entre α = 5° et α = 45° par rapport à la perpendiculaire (130) à la surface d'appui respective (101, 102), et
dans laquelle les deux picots (120) sont montés sur le corps de pédale (110) de telle sorte que la dent (121) de l'un des picots (120) soit orientée vers l'avant dans le sens de la marche et que la dent (121) de l'autre picot (120) soit orientée vers l'arrière dans le sens de la marche.

5. Pédale de bicyclette (100) selon l'une des revendications 1 à 3,
dans laquelle ledit au moins un picot (120) comporte une deuxième dent (122) qui présente également une inclinaison par rapport à la surface d'appui respective (101, 102) de la pédale de bicyclette (100),
dans laquelle l'inclinaison de la deuxième dent (122) présente également un angle (α) compris entre α = 5° et α = 45° par rapport à la perpendiculaire (130) à la surface d'appui respective (101, 102),
dans laquelle les première et deuxième dents (121, 122) sont orientées dans des directions opposées, et
dans laquelle les première et deuxième dents (121, 122) sont disposées de manière symétrique en miroir l'une par rapport à l'autre, de sorte que les première et deuxième dents (121, 122) présentent chacune, par rapport à la perpendiculaire (130), le même angle (α) de même valeur absolue, mais dans des directions différentes.

6. Pédale de bicyclette (100) selon la revendication 5,
dans laquelle ledit au moins un picot (120) comporte une plaque de montage (103) au moyen de laquelle ledit picot (120) peut être monté sur la première ou la deuxième surface d'appui (101, 102) du corps de pédale (110),
dans laquelle les deux dents (121, 122) sont disposées chacune sur la circonférence extérieure de la plaque de montage (103), en vis-à-vis l'une de l'autre,
dans laquelle les deux dents (121, 122) sont formées d'une seule pièce avec la plaque de montage (103),
dans laquelle chacune des deux dents (121, 122) est disposée sur la plaque de montage (103) dans ladite inclinaison avec un angle (α) compris entre α = 5° et α = 45°, et
dans laquelle l'une des deux dents (121, 122) est orientée vers l'avant dans le sens de la marche et l'autre des deux dents (121, 122) est orientée vers l'arrière dans le sens de la marche,
lorsque le picot (120) est monté sur le corps de pédale (110).

7. Pédale de bicyclette (100) selon la revendication 1,
dans laquelle ledit au moins un picot (120) comporte une deuxième dent (122) et une troisième dent (123) qui présentent également chacune une inclinaison par rapport à la surface d'appui respective (101, 102) de la pédale de bicyclette (100),
dans laquelle l'inclinaison de la deuxième dent (122) ainsi que l'inclinaison de la troisième dent (123) présentent également chacune un angle compris entre α = 5° et α = 45° par rapport à la perpendiculaire (130) à la surface d'appui respective (101, 102).

8. Pédale de bicyclette (100) selon la revendication 1,
dans laquelle ledit au moins un picot (120) comporte une deuxième dent (122), une troisième dent (123) et une quatrième dent (124) qui présentent également chacune une inclinaison par rapport à la surface d'appui respective (101, 102) de la pédale de bicyclette (100),
dans laquelle les inclinaisons respectives des deuxième, troisième et quatrième dents (122, 123, 124) présentent également chacune un angle compris entre α = 5° et α = 45° par rapport à la perpendiculaire (130) à la surface d'appui respective (101, 102).

9. Pédale de bicyclette (100) selon la revendication 7 ou 8,
dans laquelle les dents (121, 122, 123, 124) sont disposées de manière concentrique autour d'un axe central commun (129),
dans laquelle ledit axe central (129) est perpendiculaire à la surface d'appui respective (101, 102) du corps de pédale (110), et
dans laquelle les dents (121, 122, 123, 124) sont disposées de manière symétrique en rotation autour de l'axe central (129).

10. Pédale de bicyclette (100) selon l'une des revendications 7 à 9,
dans laquelle ledit au moins un picot (120) comporte une plaque de montage (103) au moyen de laquelle ledit picot (120) peut être monté sur la première ou la deuxième surface d'appui (101, 102) du corps de pédale (110),
dans laquelle les dents (121, 122, 123, 124) sont disposées respectivement sur la circonférence extérieure de la plaque de montage (103),
dans laquelle les dents (121, 122, 123, 124) sont formées d'une seule pièce avec la plaque de montage (103),
dans laquelle chacune des dents (121, 122, 123, 124) est disposée sur la plaque de montage (103) dans ladite inclinaison avec un angle compris entre α = 5° et α = 45°, et
dans laquelle au moins l'une des dents (121, 122, 123, 124) est orientée vers l'avant dans le sens de la marche et/ou au moins une autre des dents (121, 122, 123, 124) est orientée vers l'arrière dans le sens de la marche,
lorsque le picot (120) est monté sur le corps de pédale (110).

11. Pédale de bicyclette (100) selon la revendication 10,
dans laquelle le picot (120) et/ou le corps de pédale (110) comporte un dispositif d'aide au montage (107) qui permet de monter le picot (120) exclusivement dans une position prédéfinie sur le corps de pédale (110), dans laquelle l'une des dents (121, 122, 123, 124) est orientée vers l'avant dans le sens de la marche et une autre des dents (121, 122, 123, 124) est orientée vers l'arrière dans le sens de la marche.

12. Pédale de bicyclette (100) selon l'une des revendications 2, 6 ou 10,
dans laquelle la plaque de montage (103) comporte une ouverture de montage (106) dans laquelle peut être inséré un moyen de montage séparé (104) permettant de monter le picot (120) sur le corps de pédale (110),
dans laquelle la plaque de montage (103) présente un contour circulaire, et
dans laquelle l'ouverture de montage (106) est disposée au centre de la plaque de montage (103).

13. Pédale de bicyclette (100) selon la revendication 12,
dans laquelle le moyen de montage (104) est une vis,
soit l'ouverture de montage (105) prévue dans la plaque de montage (103) comporte un filetage, et la vis (104) peut être vissée dans le filetage à partir de la surface d'appui (101, 102) du corps de pédale (110) opposée au picot (120),
soit le corps de pédale (110) présente, sous l'ouverture de montage prévue dans la plaque de montage (103), un alésage avec un filetage, et la vis (104) peut être vissée dans le filetage à partir de la même surface d'appui (101, 102) du corps de pédale (110) sur laquelle est également disposé le picot (120).

14. Pédale de bicyclette (100) selon l'une des revendications 2, 6 ou 10,
dans laquelle la plaque de montage (103) comporte deux ouvertures de montage (106) disposées côte à côte, dans chacune desquelles peut être inséré un moyen de montage séparé (104) permettant de monter le picot (120) sur le corps de pédale (110),
dans laquelle la plaque de montage (103) présente un contour ovale et les deux ouvertures de montage (106) sont disposées l'une à côté de l'autre dans le sens de l'extension de l'ovale.

15. Pédale de bicyclette (100) selon l'une des revendications 2, 6, 10 ou 12 à 14,
dans laquelle le corps de pédale (110) présente, dans la première et/ou la deuxième surface d'appui (101, 102), un évidement (108) dans lequel la plaque de montage (103) peut être insérée avec précision, et
dans laquelle la plaque de montage (103) repose à plat sur la surface d'appui respective (101, 102) de la pédale de bicyclette (100) et est orientée parallèlement à ladite surface d'appui (101, 102).

16. Picot interchangeable (120) pour pédale de bicyclette (100),
le picot (120) présentant au moins une dent (121), **caractérisé en ce que** le picot (120) comporte une plaque de montage (103) au moyen de laquelle ledit picot (120) peut être monté sur une surface d'appui (101, 102) de la pédale de bicyclette (100),
la dent (121) étant disposée sur la plaque de montage (103) de telle sorte que la dent (121) présente une inclinaison par rapport à la surface d'appui (101, 102) de la pédale de bicyclette (100) lorsque le picot (120) est monté sur la pédale de bicyclette (100), et
l'inclinaison de la dent (121) présentant un angle (α) compris entre α = 5° et α = 45° par rapport à une perpendiculaire (130) à la surface d'appui (101,102) de la pédale de bicyclette (100).
